## Europäisches Patentamt

(19) ## European Patent Office

## Office européen des brevets

(11) Veröffentlichungsnummer: **0 035 772**
**B1**

## EUROPÄISCHE PATENTSCHRIFT

(45) Veröffentlichungstag der Patentschrift:
15.02.84

(51) Int. Cl.³: **G 06 F 9/28**

(21) Anmeldenummer: **81101648.4**

(22) Anmeldetag: **06.03.81**

(54) **Mikroprogramm-Steuereinrichtung.**

(30) Priorität: **10.03.80 DE 3009121**

(43) Veröffentlichungstag der Anmeldung:
**16.09.81 Patentblatt 81/37**

(45) Bekanntmachung des Hinweises auf die Patenterteilung:
**15.02.84 Patentblatt 84/7**

(84) Benannte Vertragsstaaten:
**AT BE CH FR GB IT LI LU NL SE**

(56) Entgegenhaltungen:
**IBM TECHNICAL DISCLOSURE BULLETIN, Heft 14, Nr. 12, Mai 1972, New York, USA, BEEBE "Instruction sequencing control", Seiten 3599-3611**

(73) Patentinhaber: **SIEMENS AKTIENGESELLSCHAFT, Berlin und München Wittelsbacherplatz 2, D-8000 München 2 (DE)**

(72) Erfinder: **Stadlmeier, Hans, Dipl.-Ing., Aichacherstrasse 2, D-8000 München 70 (DE)**

## Mikroprogramm-Steuereinrichtung

Die Erfindung betrifft eine Mikroprogramm-Steuereinrichtung mit einem Registersteuerspeicher, der bei jedem Lesezugriff ein erstes und ein zweites Mikrobefehlswort gleichzeitig für die nachfolgende Auswertung bereitstellt.

Bei Mikroprogrammsteuerungen werden allgemein Befehle in Form von Elementaroperationen nacheinander aus einem Steuer- oder Mikrobefehlsspeicher ausgelesen und nacheinander verarbeitet, wobei — soweit möglich — während des jeweils laufenden Verarbeitungszykluss bereits die Adresse für den nächsten Mikrobefehl im Steuerspeicher eingestellt und somit das Lesen des Folgebefehls vorbereitet wird.

Bekanntlich soll dabei die Dauer des Verarbeitungszykluss so auf die Zugriffszeit für den Mikrobefehlsspeicher abgestimmt sein, dass weder die Verarbeitungseinrichtung auf den Mikrobefehlsspeicher noch dieser auf die Verarbeitungseinrichtung warten muss. Um dieser Forderung bei Verwendung langsamer Steuerspeicher gerecht zu weden, sind bereits eine Reihe von Lösungen bekannt.

So werden z.B. nach der DE-OS 22 27 761 mit einem einzigen Lesezugriff gleichzeitig mehrere Mikrobefehlswörter in Pufferspeicher übergeben und von dort nacheinander in das Mikrobefehlsregister übernommen. Auch werden bei einer ausreichend breiten Mikrobefehlsstruktur Bereiche für parallel zur Hauptfunktion ausführbare Nebenfunktionen vorgesehen und so die Zahl der notwendigen Mikrobefehle für ein Mikroprogramm verringert, oder es werden gemäss der DE-AS 25 27 272 die Bereiche für jeweils nichtbenutzte Nebenfunktionen durch einen zweiten Mikrobefehl belegt, so dass mit einem einzigen Speicherzugriff wiederum zwei Mikrobefehle gleichzeitig gelesen und nacheinander verarbeitet werden, was durch ein zusätzliches Kennzeichen gesteuert wird.

Alle diese bekannten Lösungsmöglichkeiten haben aber Beschränkungen bezüglich der Verteilung der Mikrobefehlswörter im Steuer- oder Mikrobefehlsspeicher zur Folge. Das gilt insbesondere, wenn wahlweise Befehle innerhalb eines Programms aufeinanderfolgen, die zum Teil parallel zueinander oder nacheinander verarbeitet werden können.

Aus IMB-Technical Disclosure Bulletin, Vol. 14, No. 12, Mai 1972, Seiten 3599 bis 3611, ist eine Programm-Steuereinrichtung mit einem Speicher bekannt, die bei jedem Lesezugriff ein Speicherwort mit mehreren Befehlswörtern in einen Instruktionspufferspeicher IB einspeichert. Jedes Speicherwort enthält Befehlswörter, die entweder von einer oder von zwei Verarbeitungsvorrichtungen verarbeitet werden. Mit Hilfe von Flags in einer Dekodierreihenfolgetabelle DO werden die Speicherwörter aus dem Instruktionspufferspeicher IB über gesonderte Vordekodierungseinrichtungen und Register zu den beiden Verarbeitungsvorrichtungen übertragen. Die Dekodierreihenfolgetabelle erlaubt, dass jede Verarbeitungsvorrichtung weitgehend unabhängig von der anderen Verarbeitungsvorrichtung und zu sehr verschiedenen Zeitpunkten die Speicherwörter verarbeitet. Jede Vordekodierungsvorrichtung unterscheidet in jedem Speicherwort jene Befehlswörter, die für die zugehörige Verarbeitungsvorrichtung bestimmt sind und steuert eine zugehörige Abtastvorrichtung, die jene Befehlswörter abtastet und überträgt. Obwohl anzunehmen ist, dass diese bekannte Befehlssteuerung für die Verarbeitung von Makrobefehlen und nicht für die Verarbeitung von Mikrobefehlen vorgesehen ist, erscheint die Übertragung einer derartigen Lösung auf eine Mikrobefehlssteuerung wenig sinnvoll. Auch wäre eine derartige Lösung viel zu aufwendig

Aufgabe der Erfindung ist es daher, eine Mikroprogramm-Steuereinrichtung der eingangs genannten Art zu schaffen, bei der einzeln nacheinander oder parallel zueinander ausführbare Befehle freizügiger im Steuerspeicher angeordnet sein können und die für die richtige Befehlszuweisung nur geringen zusätzlichen Aufwand erfordert, damit eine durch die Speicherwortbreite des Registersteuerspeichers bedingte Unterteilung der ablaufenden Mikrobefehlsketten keine freien Speicherplätze erzwingt.

Die Mikroprogramm-Steuereinrichtung gemäss der Erfindung ist im Patenanspruch 1 gekennzeichnet.

Die den Ausgängen für die beiden jeweils gleichzeitig gelesenen Mikrobefehlswörter nachgeschalteten Multiplexer stellen zunächst sicher, dass jedes Mikrobefehlswort unabhängig von der Lage im Registersteuerspeicher, nämlich an erster oder zweiter Stelle innerhalb eines Doppelwortes, an das zugehörige Mikrobefehlsregister weitergeleitet werden kann. Befindet sich ein Befehl, zu dem ein nachfolgender Befehl parallel ausgeführt werden kann, an erster Stelle, so können die beiden gleichzeitig bereitgestellten Befehle unmittelbar an die Mikrobefehlsregister weitergeleitet und für die Verarbeitung freigegeben werden. Befindet sich dagegen ein solcher Befehl an zweiter Stelle, so muss vorher das nachfolgende Mikrobefehlsdoppelwort vom Registersteuerspeicher bereitgestellt werden. Das Zwischenspeicherregister verhindert in diesem Falle den zwischenzeitlichen Verlust des noch nicht verarbeiteten Mikrobefehles aus dem vorangehenden Doppelwort. Den gesamten Ablauf steuert eine Bereitstellungs-Steuereinrichtung anhand von in den Mikrobefehlswörtern mitgeführten Befehlskennzeichnungen in Form von Steuerbits. Mikrobefehlswörter, die zu einem nachfolgenden Mikrobefehlswort parallel verarbeitet werden können, können daher wahlweise an erster oder zweiter Stelle eines in Registersteuerspeicher enthaltenen Doppelwortes gespeichert sein, so dass ein grösserer Freiheitsgrad bei der Belegung des Registersteuerspeichers gegeben ist, d.h. die einzelnen Mikrobefehlswörter können lückenlos aneinander anschliessend ohne Rücksicht auf die Doppelwortstruktur des Registersteuerspeichers angeordnet sein, ohne dass Speicherplatz verschenkt wird.

Damit die Bereitstellungs-Steuereinrichtung erkennen kann, ob im Zwischenspeicherregister ein Mikrobefehlswort zwischengespeichert ist, ist wenigstens dem Zwischenspeicherregister ein Gültigkeitsmerker zugeordnet, der die Zwischenspeicherung eines Mikrobefehlswortes anzeigt, und es werden die Befehlskennzeichnungen des im Zwischenspeicherregister zwischengespeicherten Mikrobefehlswortes von der Bereitstellungs-Steuereinrichtung nur dann berücksichtigt, wenn der Gültigkeitsmerker gesetzt ist.

Zweckmässig ist auch den Mikrobefehlsregistern für die selbständig arbeitenden Verarbeitungseinrichtungen jeweils ein Gültigkeitsmerker zugeordnet. Auch ist es vorteilhaft, wenn die Gültigkeitsmerker von der Bereitstellungs-Steuereinrichtung verwaltet und jeweils beim Laden eines gültigen Mikrobefehlswortes in das zugehörige Register gesetzt werden.

Um sicherzustellen, dass das jeweils zu verarbeitende Mikrobefehlswort eindeutig festgelegt ist, auch wenn für das Vorauslesen des nächsten Doppelwortes im Registersteuerspeicher die Leseadresse auf das erste Wort des Doppelwortes zeigt, und um sicherzustellen, dass die Mikrobefehlswörter im Registersteuerspeicher trotz der Doppelwortanordnung folgerichtig adressiert werden, weist die Bereitstellungs-Steuereinrichtung gemäss einer Weiterbildung der Erfindung eine Einrichtung zur Kennzeichnung des im jeweils nächsten Bereitstellungszyklus zu berücksichtigenden Mikrobefehlswortes, die die Steuerlogik der Bereitstellungs-Steuereinrichtung beeinflusst, sowie eine Einrichtung zur Steuerung der Adressenrechnung für den Registersteuerspeicher auf.

Die Einrichtung zur Kennzeichnung des im jeweils nächsten Bereitstellungszyklus zu berücksichtigenden Mikrobefehlswortes kann in einfacher Weise aus einem ODER-Glied bestehen, das das niedrigste Adressenbit der im Adressenregister für den Registersteuerspeicher enthaltenen Adresse zur Kennzeichnung der Mikrobefehlswörter an zweiter Stelle mit dem Gültigkeitsmerker für das Zwischenspeicherregister verknüpft.

Zur Steuerung der linearen Adressenfolge für den Registersteuerspeicher wird die im Adressenregister jeweils vorhandene Adresse in einfacher Weise abhängig von einem Signal der Einrichtung zur Steuerung der Adressenrechnung in der Bereitstellungs-Steuereinrichtung um den Wert "1" oder "2" erhöht.

Zur Bewältigung von nichtlinearen Adressenänderungen und von Wiederholungen im Fehlerfall ist gemäss einer anderen Weiterbildung der Erfindung der Gültigkeitsmerker für das Zwischenspeicherregister zweistufig ausgeführt, wobei der Inhalt der ersten Stufe zeitverzögert auch in die zweite Stufe übernommen wird, die allein für den Steuerungsablauf durch die Bereitstellungs-Steuereinrichtung massgebend ist. Dabei wird die zweite Stufe bei jeder nichtlinearen Adressenänderung, z.B. beim Sprung, für den Registersteuerspeicher zurückgesetzt und bei einem nachfolgenden Fehler im laufenden Bereitstellungszyklus der nächstfolgende Ergebnistakt zur Änderung der Daten in den Registern gesperrt.

Weitere Einzelheiten der Erfindung seien nachfolgend anhand eines in der Zeichnung dargestellten Ausführungsbeispieles näher erläutert. Im einzelnen zeigen:

Fig. 1 das Blockschaltbild einer Mikroprogramm-Steuereinrichtung gemäss der Erfindung,

Fig. 2 die tabellarische Zusammenstellung der Befehlskennzeichnungen und deren Bedeutung,

Fig. 3 ein Blockschaltbild für die Signalverknüpfung in der Bereitstellungs-Steuereinrichtung von Fig. 1 und

Fig. 4 ein Flussdiagramm für die Signalverknüpfung in der Bereitstellungs-Steuereinrichtung gemäss Fig. 1 und Fig. 3.

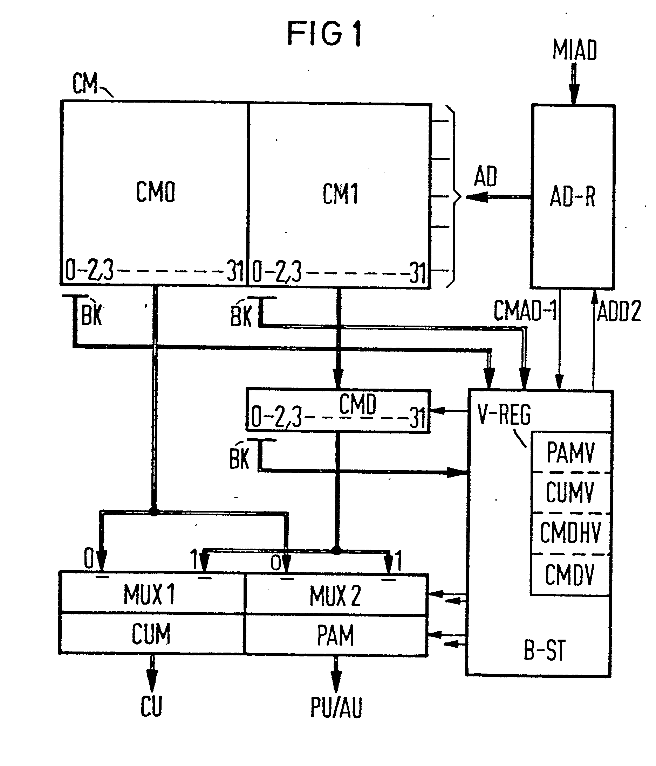

Bei dem Blockschaltbild für die Mikroprogramm-Steuereinrichtung gemäss Fig. 1 ist der Registersteuerspeicher für die Bereitstellung der einzelnen Mikrobefehlswörter mit CM bezeichnet. Dieser Speicher gliedert sich in zwei Hälften CM0 und CM1 für die Speicherung von Mikrobefehlswörtern mit insgesamt 32 Bit, wobei die einzelen Bitstellen mit 0 bis 31 bezeichnet sind. Jedes der Mikrobefehlswörter in der Speicherhälfte CM0 bildet mit einem Mikrobefehlswort aus der anderen Speicherhälfte CM1 ein Doppelwort, wobei die einzelnen Doppelwörter über eine Adresse AD, die von einem Adressenrechner AD-R bereitgestellt wird, wahlweise ansteuerbar ist.

Der Adressenrechner AD-R ist in herkömmlicher Weise aufgebaut. Bei linearer Adressenfolge wird z.B. ein Binärzähler schrittweise fortgeschaltet, wobei die Ansteueradressen AD für den Registersteuerspeicher CM von den $n-1$ Bits der höchsten Wertigkeit abgeleitet werden, während das niedrigste Bit anzeigt, welches der beiden Mikrobefehlswörter eines Doppelwortes normalerweise zur Verarbeitung ansteht. Bei nichtlinearen Adressenänderungen wird die Adresse in bekannter Weise von einer von aussen zugeführten Adresse MIAD abgeleitet.

Mit dem Ausgang der Speicherhälfte CM1 ist ein Zwischenspeicherregister CMD verbunden, das wahlweise ein komplettes Mikrobefehlswort aus der Speicherhälfte CM1 zwischenspeichern kann. Weiterhin sind zwei Multiplexer MUX1 und MUX2 vorgesehen, wobei jedem Multiplexer ein Mikrobefehlsregister für eine selbständig arbeitende Verarbeitungseinheit nachgeschaltet ist. Gemäss dem gewählten Ausführungsbeispiel wird über dem Multiplexer MUX1 das Mikrobefehlsregister CUM für die Kontrolleinheit CU eines Prozessors und über den Multiplexer MUX2 das Mikrobefehlsregister PAM erreicht, das wahlweise die logische Verarbeitungseinheit PU oder die Zugriffseinheit AU des Prozessors mit einem Mikrobefehl versorgt. Die Multiplexer MUX1 und MUX2 weisen jeweils zwei Eingänge 0 und 1 auf, wobei über die Eingänge 0 Mikrobefehlswörter aus der Speicherhälfte CMO und über die Eingänge 1 Mikrobefehlswörter aus der Speicherhälfte CM1 bzw. dem Zwischenspeicherregister CMD zugeführt werden können.

Mikrobefehlswörter aus jeder Speicherhälfte CM0 bzw. CM1 des Registersteuerspeichers CM können dadurch wahlweise über den einen oder anderen Multiplexer MUX1 oder MUX2 zu den nachgeschalteten Mikrobefehlsregistern CUM oder PAM geleitet werden. Die Entscheidung hierüber, an welches Mikrobefehlsregister die vom Registersteuerspeicher CM bereitgestellten Mikrobefehlswörter weiterzuleiten sind, trifft die Bereitstellungssteuereinrichtung B-ST anhand von im Mikrobefehlswort mitgeführten Befehlskennzeichnungen BK, die von den Bit 0 bis 2 im Mikrobefehlswort gebildet werden. Innerhalb der Bereitstellungs-Steuereinrichtung B-ST ist ein Gültigkeitsmerker-Register V-REG vorgesehen. Dies Register weist für jedes der beiden Mikrobefehlsregister CUM und PAM einen Gültigkeitsmerker CUMV bzw. PAMV auf. Für das Zwischenspeicherregister CMD ist der Gültigkeitsmerker zweistufig ausgeführt, wobei CMDHV die erste Stufe und CMDV die zweite Stufe bezeichnet. Die Verwaltung dieser Gültigkeitsmerker erfolgt durch die Bereitstellungs-Steuereinrichtung, und zwar werden die Gültigkeitsmerker CUMV, PAMV und CMDHV jeweils mit Speicherung eines gültigen Mikrobefehlswortes in den zugehörigen Registern gesetzt. Innerhalb eines jeden von der Bereitstellungs-Steuereinrichtung B-ST kontrollierten Bereitstellungszyklus wird beim Setzen des Gültigkeitsmerkers CMDHV zeitverzögert auch der Gültigkeitsmerker CMDV gesetzt, der neben den Gültigkeitsmerkern CUMV und PAMV allein auf die Verknüpfungslogik der Bereitstellungs-Steuereinrichtung B-ST einwirkt. Der Zweck für diese Zweiteilung des Gültigkeitsmerkers für das Zwischenspeicherregister CMD wird später noch erläutert werden. Analoges gilt für die darüber hinaus noch gezeigten Wechselbeziehungen zwischen der Bereitstellungs-Steuereinrichtung B-ST und dem Adressenrechner AD-R über die Leitungen CMAD-1 und ADD2.

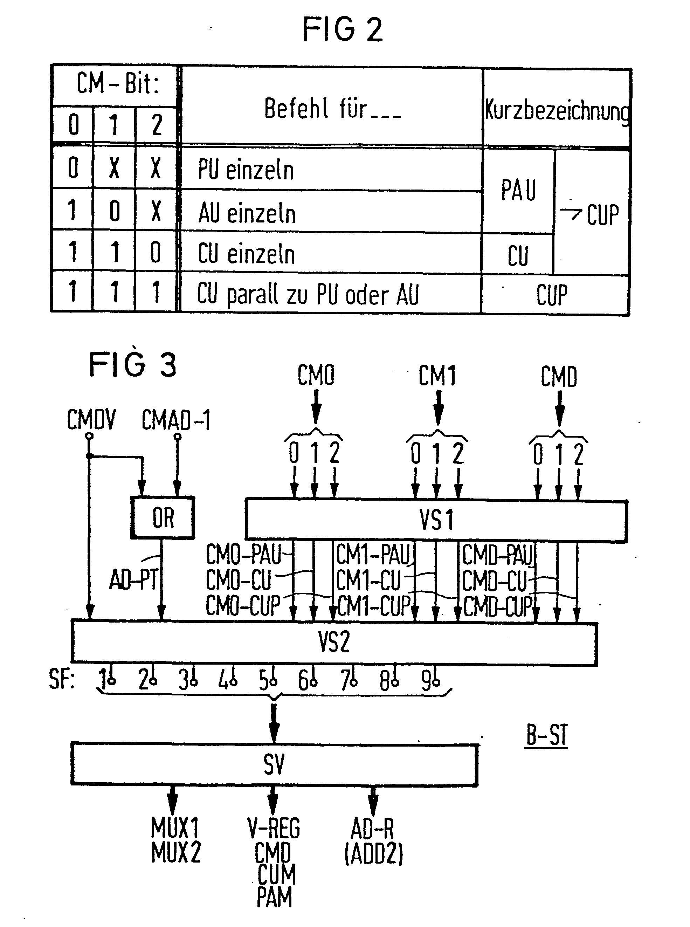

Fig. 2 zeigt eine tabellarische Zusammenstellung der durch die Bit 0 bis 2 eines jeden Mikrobefehlswortes im Registersteuerspeicher CM festgelegten Befehlskennzeichnungen BK. Der linke Teil der Tabelle gibt die möglichen Bitkombinationen der CM-Bit 0 bis 2 wieder. Der mittlere Teil der Tabelle gibt an, für welche der drei möglichen Verarbeitungseinheiten CU, PU und AU gemäss Fig. 1 der jeweilige Befehl vorgesehen ist. Danach beziehen sich die ersten drei Bitkombinationen entsprechend den ersten drei Zeilen auf Einzelbefehle für die Verarbeitungseinheiten PU bzw. AU bzw. CU, und die vierte Zeile kennzeichnet einen Befehl für die Verarbeitungseinheit CU, der parallel zu einem Befehl für die Einheiten PU oder AU ausführbar ist. Der rechte Teil von Fig. 2 ordnet den einzelnen Befehlen Kurzbezeichnungen zu, die eine Vereinfachung für das später noch zu beschreibende Flussdiagramm mit sich bringen. Die Kurzbezeichnung PAU steht gemeinsam für Befehle der Verarbeitungseinheiten PU und AU, da diese über das gemeinsame Mikrobefehlsregister PAM versorgt werden. Gleichbedeutend damit ist der Befehl CU für die Verarbeitungseinheit CU, wenn diese nicht parallel zu einer der Verarbeitungsersten drei Zeilen aufgeführten Befehle können ersten drPei Zeilen aufgeführten Befehle können daher auch unter der gemeinsamen Bezeichnung – CUP zusammengefasst werden. Demgegenüber steht der Befehl von Zeile 4, der mit CUP gekennzeichnet ist und der eine Parallelarbeit der Verarbeitungseinheit CU mit der Verarbeitungseinheit PU oder AU zulässt.

Fig. 3 zeigt das Blockschaltbild der Verknüpfungslogik innerhalb der Bereitstellungs-Steuereinrichtung B-ST von Fig. 1. Dieses Blockschaltbild besteht im wesentlichen aus zwei Verknüpfungsschaltungen VS1 und VS2, sowie einem Signalverteiler SV und einem ODER-Glied OR. Der Verknüpfungsschaltung VS1 werden die die Befehlskennzeichnung BK bildenden Bits 0 bis 2 der Mikrobefehlswörter aus den beiden Speicherhälften CM0 und CM1 sowie dem Zwischenspeicherregister CMD zugeführt und daraus auf die jeweilige Quelle CM0, CM1 und CMD bezogene Befehlstypensignale analog den in Fig. 2 angegebenen Kurzbezeichnungen abgeleitet, die der zweiten Verknüpfungsschaltung VS2 zugeleitet werden. Auf diese Verknüpfungsschaltung wirken des weiteren der Gültigkeitsmerker CMDV für das Zwischenspeicherregister CMD und das Signal AD-PT ein, das aus dem Gültigkeitsmerker CMDV und dem niedrigsten Bit CMAD-1 der Adresse für den Registersteuerspeicher CM durch das ODER-Glied OR gebildet wird. Das Signal AD-PT kennzeichnet als Adressenpointer dasjenige Mikrobefehlswort eines Doppelwortes aus dem Speicher CM, das unabhängig von der Kennzeichnung durch die Ansteueradresse für den Speicher CM im jeweils nächsten Bereitstellungszyklus zu berücksichtigen ist. Abhängig von den zugeführten Eingangssignalen kennzeichnet die Verknüpfungsschaltung VS2 jeweils eine von neun möglichen Signalfolgen SF1 bis SF9, die dann vom nachgeschalteten Signalverteiler SV ausgelöst wird und die einzelnen in Fig. 1 gezeigten Bausteine mit Takt- und Steuersignalen versieht.

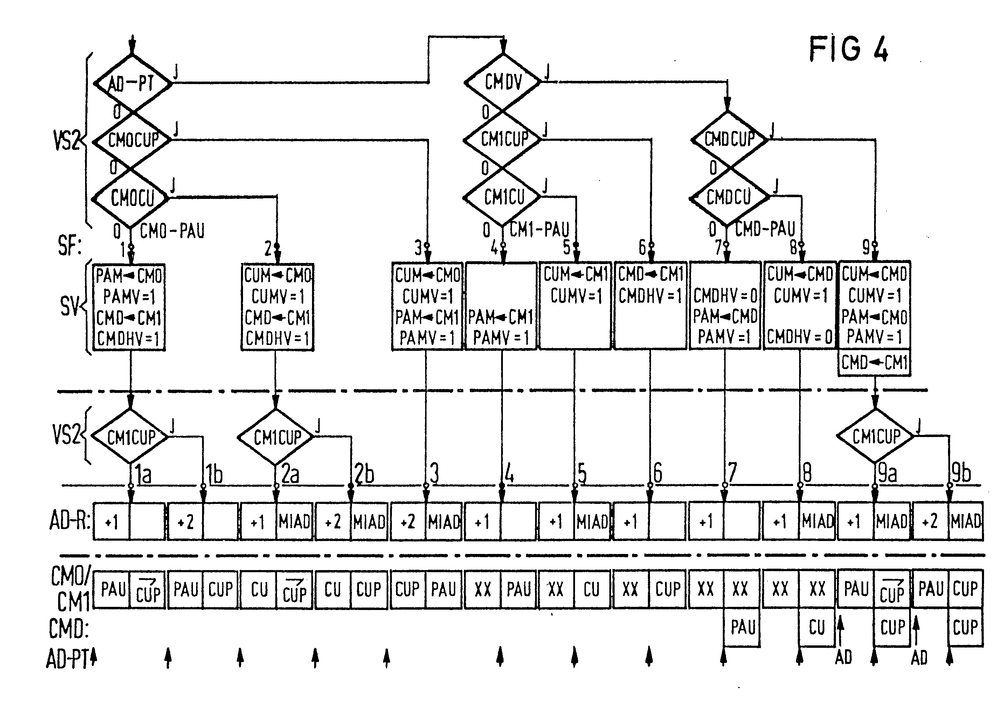

Die in Fig. 3 gezeigten einzelnen Baugruppen können in an sich bekannter Weise mit an sich bekannten Techniken verwirklicht werden. Die von diesen Bausteinen zu verwirklichenden Verknüpfungs- und Schaltfunktionen ergeben sich aus dem Flussdiagramm gemäss Fig. 4.

Der obere Teil von Fig. 4 zeigt eine Reihe von Verzweigungen durch die logische Verknüpfungsschaltung VS2 von Fig. 3, wobei ausgehend vom Eingangssignal AD-PT die von der logischen Verknüpfungsschaltung VS1 bereitgestellten Eingangssignale überprüft werden. Diese Überprüfung führt zur Bestimmung einer der Signalfolgen SF1 bis SF9 mit der Folge, dass die in den darunter liegenden Operationskästen angegebenen Operationen vom Signalverteiler SV durchgeführt werden. Ausgehend von der jeweils eingeleiteten Signalfolge SF... werden ebenfalls direkt oder abhängig von weiteren Entscheidungsprüfungen durch die Verknüpfungsschaltung VS2 die Steuersignale für den Adressenrechner AD-R abgeleitet. Diese Signale beziehen sich lediglich auf die Angaben im jeweils linken Teil der die Zeile AD-R bildenden Kästchen. Der untere Teil von Fig. 4 bezieht sich auf die zu Beginn eines jeden Bereitstellungszyklus am Ausgang der beiden Speicherhälften CM0 und CM1 zur Verfügung stehenden und gegebenenfalls im Zwischenspeicherregister CMD zwischengespeicherten Befehle, wobei die in Fig. 2 angegebenen Kurzbezeichnungen verwendet worden sind. Die letzte Zeile von Fig. 4 bezieht sich auf die Kennzeichnung des jeweils zu berücksichtigenden Mikrobefehlswortes durch den Adressenpointer AD-PT. Für die aus den Signalfolgen SF1 bis SF3 ableitbaren Steuerungsmöglichkeiten zeigt der Adressenpointer AD-PT jeweils auf das Mikrobefehlswort an erster Stelle im vom Speicher CM zur Verfügung gestellten Doppelwort, also das in der Speicherhälfte CM0 enthaltene Mikrobefehlswort. In allen übrigen Fällen, also bei den von den Signalfolgen SF4 bis SF9 abgeleiteten Steuerungsmöglichkeiten, zeigt der Adressenpointer AD-PT dagegen auf das an zweiter Stelle im Doppelwort stehende Mikrobefehlswort. Konform mit der Kennzeichnung des jeweils ersten oder zweiten Mikrobefehlswortes innerhalb eines Doppelwortes erfolgt mit der Überprüfung des Signals AD-PT die Verzweigung der Auswertung durch die Verknüpfungsschaltung VS2 im oberen Teil von Fig. 4.

Im ganz links gezeigten Fall 1a werden vom Speicher CM die Befehle PAU und –CUP zur Verfügung gestellt, wobei zunächst der Befehl PAU auszuführen ist. Die Auswertung der zugehörigen Befehlskennzeichnungen führt zur Signalfolge SF1. Demzufolge wird das Mikrobefehlswort aus der Speicherhälfte CM0 in das Befehlsregister PAM übergeben. Der zugehörige Gültigkeitsmerker PAMV wird auf 1 gesetzt. Da es sich bei dem Befehl PAU um einen einzeln auszuführenden Befehl handelt, muss der gleichzeitig von der Speicherhälfte CM1 bereitgestellte Befehl –CUP im Zwischenspeicherregister CMD zwischengespeichert werden. Entsprechend wird der zugehörige Gültigkeitsmerker CMDHV auf 1 gesetzt. Für die Adressensteuerung wird des weiteren überprüft, ob der von der Speicherhälfte CM1 bereitgestellte Befehl ein Befehl vom Typ CUP ist. Da dies beim Fall 1a voraussetzungsgemäss nicht zutrifft, wird die im Adressenrechner AD-R vorhandene Adresse für den Speicher CM nur um einen Schritt weitergeschaltet, so dass im nächsten Bereitstellungszyklus der Adressenpointer AD-PT auf das zweite Befehlswort im Doppelwort zeigt. Die Doppelwortadresse AD für den Speicher CM wird dadurch nicht beeinflusst, da die Änderung der niedrigsten Bitstelle der Adresse die Doppelwortadresse nicht beeinflusst. Liefert dagegen die Speicherhälfte CM1 gemäss Fall 1b einen Befehl vom Typ CUP, so wird die Adresse für den Speicher CM im Adressenrechner AD-R um zwei Schritte erhöht und folglich das nächste Doppelwort angesteuert, damit zusammen mit dem im Zwischenspeicherregister CMD zwischengespeicherten Befehl CUP im nächsten Bereitstellungszyklus der parallel ausführbare nachfolgende Befehl vom Speicher CM bereitgestellt werden kann. Unabhängig davon zeigt der Adressenpointer AD-PT auf den als nächsten Befehl auszuführenden Befehl CUP, der im Zwischenspeicherregister CMD zwischengespeichert wird, da mit Setzen des Gültigkeitsmerkers CMDHV zeitverzögert im laufenden Bereitstellungszyklus auch der Gültigkeitsmerker CMDV gesetzt wird, der über das ODER-Glied OR in Fig. 3 unabhängig vom niedrigsten Adressenbit CMAD-1 das entsprechende Signal AD-PT liefert.

Analoges gilt für die Fälle 2a und 2b, wenn anstelle des Befehls PAU der Befehl CU von der Speicherhälfte CM0 geliefert wird, nur wird das von der Speicherhälfte CM0 gelieferte Befehlswort an das Befehlsregister CUM weitergeleitet und demzufolge der Gültigkeitsmerker CUMV gesetzt. Eine weitere Besonderheit ergibt sich daraus, dass mit jedem Befehl CU, der von der Kontrolleinheit ausgeführt wird, eine nichtlineare Adressenänderung verbunden sein kann. In der rechten Hälfte der die Zeile AD-R bildenden Kästchen ist daher ein Eintrag MIAD vorgesehen, der anzeigt, dass wahlweiss eine lineare Adressenänderung um ein oder zwei Zählschritte oder aber eine nichtlineare Adressenänderung anhand einer dem Adressenrechner AD-R von aussen zugeführten Adresse MIAD vorzunehmen ist.

Die Befehlskombination CUP/PAU gemäss Fall 3, die die Signalfolge SF3 auslöst, stellt den Idealfall dar, da nämlich zugleich mit dem Befehl CUP an erster Stelle der parallel dazu ausführbare Befehl PAU bereitgestellt wird. Beide Befehle können daher unmittelbar in die zugehörigen Befehlsregister überführt werden, also das Befehlswort aus der Speicherhälfte CM0 in das Befehlsregister CUM und das Befehlswort aus der Speicherälfte CM1 in das Befehlsregister PAM, wobei gleichzeitig die zugehörigen Gültigkeitsmerker CUMV und PAMV gesetzt werden. Folglich wird auch die Adresse im Adressenrechner AD-R um zwei Schritte bei linearer Adressenfolge erhöht und damit das nächste Doppelwort angesteuert oder es wird im Falle einer nichtlinearen Adressenänderung die Adresse MIAD verwendet.

In Auswirkung der Signalfolgen SF1 oder SF2 mit Zwischenspeicherung des von der Speicherhälfte CM1 gelieferten Befehlswortes im Zwischenspeicherregister CMD und gleichzeitigem Setzen des Gültigkeitsmerkers CMDHV wird im jeweils ablaufenden Bereitstellungszyklus auch der Gültigkeitsmerker CMDV gesetzt, so dass im nachfolgenden Bereitstellungszyklus die Signalfolgen SF7 bis SF9 entsprechend den Fällen 7 bis 9b zum Tragen kommen. Ist gemäss Fall 7 im Zwischenspeicherregister CMD ein Befehl PAU gespeichert, der als Einzelbefehl allein verarbeitet wird, so wird dieser Befehl vom Zwischenregisterspeicher CMD in das zugehörige Befehlsregister PAM übertragen, der zugehörige Gültigkeitsmerker PAMV gesetzt und der Gültigkeitsmerker CMDHV gelöscht. Für die nachfolgende Adressenrechnung wird der Adressenzähler normalerweise um einen Schritt weitergeschaltet und damit das nächstfolgende Doppelwort im Speicher CM adressiert. Analoges gilt für den Fall 8 mit dem Unterschied, dass im Zwischenspeicherregister CMD ein Befehl CU gespeichert ist, der gegebenenfalls eine nichtlineare Adressenänderung anhand der von aussen zugeführten Adresse MIAD auslösen kann. Ist dagegen, wie bei den Fällen 9a und 9b, im Zwischenspeicherregister CMD ein Befehl CUP gespeichert, der parallel zu einem nachfolgenden Befehl PAU auszuführen ist, so muss zunächst das nachfolgende Doppelwort im Speicher CM gelesen werden. In diesem Falle ergibt sich eine Diskrepanz zwischen der Adresse AD und dem internen Adressenpointer AD-PT, der nach wie vor auf das zweite Wort innerhalb eines Doppelwortes zeigt, das allerdings im Zwischenspeicherregister CMD zwischengespeichert ist. Die Fälle 9a und 9b ergeben sich als Folgefälle aus den Fällen 1b und 2b, die eine Erhöhung des Adressenzählers für den Speicher CM um zwei Schritte nach sich ziehen und damit die Bereitstellung des nachfolgend benötigten Doppelwortes auslösen. Mit der Signalfolge 9 wird daher der im Zwischenspeicherregister CMD enthaltene Befehl CUP in das Register CUM überführt und der zugehörige Gültigkeitsmerker CUMV gesetzt. Gleichzeitig wird von dem bereitgestellten nachfolgenden Doppelwort das Befehlswort aus der Speicherhälfte CM0 in das Register PAM überführt und der zugehörige Gültigkeitsmerker PAMV ebenfalls gesetzt, so dass zwei Befehle gleichzeitig in den Befehlsregistern zur Verarbeitung zur Verfügung stehen. Mit einem Folgetakt, was durch einen Querstrich im zugehörigen Operationenfeld angedeutet ist, wird das zweite Wort des vom Speicher CM bereitgestellten Doppelwortes aus der Hälfte CM1 in das Zwischenspeicherregister CMD überführt. Der bis dahin gesetzte zugehörige Gültigkeitsmerker CMDHV bleibt aufgrund der erneuten Zwischenspeicherung im Zwischenspeicherregister CMD gesetzt. Dieser bis hierher geschilderte Ablauf ist für beide Fälle 9a und 9b gleich. Unterschiede ergeben sich lediglich bezüglich der Adressrechnung. Liegt entsprechend dem Fall 9a an zweiter Stelle des gelesenen Doppelwortes ein Befehl –CUP, also ein einzeln auszuführender Befehl vor, so wird der Adressenzähler im Adressenrechner AD-R nur um einen Schritt erhöht und damit auf die Signalfolge 7 oder 8 für den nachfolgenden Bereitstellungszyklus übergeleitet. Handelt es sich dagegen um einen parallel ausführbaren Befehl CUP, so muss bereits das nächstfolgende Doppelwort im Speicher CM angesteuert und demzufolge der Adressenzähler um zwei Schritte erhöht werden. Im nächstfolgenden Bereitstellungszyklus ergibt sich daher ausgehend von der Signalfolge 9 entweder der Fall 9a oder wiederum der Fall 9b.

Die Signalfolgen SF4 bis SF6 stellen Sonderfälle dar, die nur zum Tragen kommen, wenn einerseits der Adressenpointer AD-PT auf das zweite Befehlswort im Speicher CM zeigt und andererseits im Zwischenspeicherregister CMD kein Befehl gespeichert ist. Diese Voraussetzungen sind normalerweise nur nach einer nichtlinearen Adressenänderung, z.B. nach einem Sprung, erfüllt. Bei den Befehlen PAU und CU analog den Fällen 4 und 5 werden die Befehle zur Befehlsverarbeitung in die zugehörigen Register übernommen und die zugehörigen Gültigkeitsmerker gesetzt. Liegt dagegen entsprechend Fall 6 ein Befehl CUP vor, so kann dieser nicht unmittelbar ausgeführt werden, da erst der parallel dazu zu verarbeitende Befehl bereitgestellt werden muss. Der Befehl CUP wird daher im Zwischenspeicherregister CMD zunächst zwischengespeichert und der zugehörige Gültigkeitsmerker CMDHV gesetzt. In allen drei Fällen 4 bis 6 wird der Adressenzähler im Adressenrechner AD-R um 1 erhöht und damit die Adresse auf das nachfolgende Doppelwort im Speicher CM eingestellt.

Die Bereitstellungssteuerung B-ST erfüllt also mehrere Aufgaben. Zunächst steuert sie über die Multiplexer das Laden der einzelnen Befehlsregister anhand der in den Mikrobefehlswörtern mitgeführten Befehlskennzeichnungen BK, des weiteren verwaltet sie das Zwischenspeicherregister CMD, dessen Inhalt entscheidend in den Steuerungsablauf eingreift. Schliesslich ist der Adressenpointer AD-PT zu berücksichtigen, da bei einem Befehl CUP an zweiter Stelle eines Doppelwortes infolge des Vorauslesens des nächsten Doppelwortes die Adresse AD für den Registersteuerspeicher CM nicht mehr auf die als nächste durchzuführende Elementaroperation weist. Die Belegung der einzelnen Register, insbesondere des Zwischenspeicherregisters CMD wird durch zugehörige Gültigkeitsmerker überwacht, wobei der Gültigkeitsmerker für das Zwischenspeicherregister CMD zweistufig ausgeführt ist und aus den Merkern CMDHV und CMDV besteht. Beim Belegen des Zwischenspeicherregisters CMD wird zunächst der Gültigkeitsmerker CMDHV und zeitverzögert im laufenden Bereitstellungszyklus auch der Gültigkeitsmerker CMDV gesetzt, wobei aber nur der Gültigkeitsmerker CMDV, wie bereits erläutert, in die Ablaufsteuerung eingreift. Diese Zweiteilung ist wegen einer möglichen Fehlerwiederholung nötig. Bei jeder nichtlinearen Adressenänderung, z.B. Sprung, muss nämlich der Gültigkeitsmerker CMDV zurückgesetzt werden. Passiert nun während des laufenden Bereitstellungszykluss ein Fehler, so wird bekanntlich der Änderungstakt für die Register im laufenden Zyklus gesperrt, so dass sämtliche Eingangsbedingungen für das gerade anstehende Mikrobefehlswort erhalten bleiben, wenn zusätzlich der Gültigkeitsmerker CMDHV zur Verfügung steht, der dann wieder im Laufe des Bereitstellungszyklus den Gültigkeitsmerker CMDV setzen kann. Letztlich hat die Bereitstellungs-Steuereinrichtung B-ST — wie bereits erläutet — Einfluss auf die Adressenrechnung für den Registersteuerspeicher CM, damit die jeweils benötigten Befehlswörter zeitgerecht bereitgestellt werden können.

**Patentansprüche**

1. Mikroprogramm-Steuereinrichtung mit einem Registersteuerspeicher, der bei jedem Lesezugriff ein erstes und ein zweites Mikrobefehlswort gleichzeitig für die nachfolgende Auswertung bereitstellt, dadurch gekennzeichnet, dass der Ausgang des Registersteuerspeichers (CM) für das zweite Mikrobefehlswort (Teil CM1) mit einem Zwischenspeicherregister (CMD) verbunden ist, dass der Ausgang des Registersteuerspeichers (CM) für das erste Mikrobefehlswort (Teil CM0) und der Ausgang des Zwischenspeicherregisters (CMD) für das zweite Mikrobefehlswort jeweils mit einem der Eingänge von zwei Multiplexern (MUX1, MUX2) verbunden sind, die wahlweise das eine oder andere der beiden am Eingang jeweils zur Verfügung stehenden Mikrobefehlswörter zum Ausgang durchschalten, dass der Ausgang jedes Multiplexers (MUX1, MUX2) mit einem Befehlsregister (CUM bzw. PAM) einer selbständig arbeitenden Verarbeitungseinhiet (CU) bzw. einer Gruppe von Verarbeitungseinheiten (PU, AU) verbunden ist und dass die Übergabe der vom Registersteuerspeicher (CM) und/oder Zwischenspeicherregister (CMD) jeweils bereitgestellten Mikrobefehlswörter in die zugehörigen Befehlsregister (CUM bzw. PAM) durch eine Bereitstellungs-Steuereinrichtung (B-ST) abhängig von im jeweiligen Mikrobefehlswort mitgeführten Befehlskennzeichnungen (BK) gesteuert wird, so dass die vom Registersteuerspeicher (CM) ggf. in zwei nachfolgenden Lesezugriffen bereitgestellten Mikrobefehlswörter wahlweise einzeln nacheinander oder gleichzeitig parallel zueinander von den einzelnen Verarbeitungseinheiten (CU, PU oder AU) verarbeitet werden, wobei für den Fall, dass ein Mikrobefehlswort, zu dem ein nachfolgendes Mikrobefehlswort parallel ausgeführt werden muss, sich an erster Stelle innerhalb eines Doppelwortes befindet, die beiden gleichzeitig bereitgestellten Befehle unmittelbar an die Mikrobefehlsregister weitergeleitet werden, und wobei für den Fall, dass das Mikrobefehlswort sich an zweiter Stelle innerhalb eines Doppelwortes befindet, dieses Mikrobefehlswort in das Zwischenspeicherregister gespeichert wird, so dass dieses Mikrobefehlswort gleichzeitig mit dem an erster Stelle liegenden Mikrobefehlswort des nachfolgenden Doppelwortes an die Mikrobefehlsregister weitergeleitet wird.

2. Mikroprogramm-Steuereinrichtung nach Anspruch 1, dadurch gekennzeichnet, dass wenigstens dem Zwischenspeicherregister (CMD) ein Gültigkeitsmerker (CMDV) zugeordnet ist, der die Zwischenspeicherung eines Mikrobefehlswortes anzeigt, und dass die Befehlskennzeichnungen (BK) des im Zwischenspeicherregister (CMD) zwischengespeicherten Mikrobefehlswortes von der Bereitstellungs-Steuereinrichtung (B-ST) nur dann berücksichtigt werden, wenn der Gültigkeitsmerker (CMDV) gesetzt ist.

3. Mikroprogramm-Steuereinrichtung nach Anspruch 2, dadurch gekennzeichnet, dass auch den Mikrobefehlsregistern (CUM, PAM) für die selbständig arbeitenden Verarbeitungseinheiten (CU, PU, AU) jeweils ein Gültigkeitsmerker (CUMV, PAMV) zugeordnet ist.

4. Mikroprogramm-Steuereinrichtung nach Anspruch 2 oder 3, dadurch gekennzeichnet, dass die Gültigkeitsmerker (CMDV, CUMV, PAMV) von der Bereitstellungs-Steuereinrichtung (B-ST) verwaltet und jeweils beim Laden eines gültigen Mikrobefehlswortes in das zugehörige Register (CMD, CUM, PAM) gesetzt werden.

5. Mikroprogramm-Steuereinrichtung nach einem der Ansprüche 1 bis 4, dadurch gekennzeichnet, dass die Bereitstellungs-Steuereinrichtung (B-ST) eine Einrichtung zur Kennzeichnung des im jeweils nächsten Bereitstellungszyklus zu berücksichtigenden Mikrobefehlswortes, die die Steuerlogik der Bereitstellungs-Steuereinrichtung (B-ST) beeinflusst, sowie eine Einrichtung zur Steuerung der Adressenrechnung für den Registersteuerspeicher (CM) aufweist.

6. Mikroprogramm-Steuereinrichtung nach Anspruch 5, dadurch gekennzeichnet, dass die Einrichtung zur Kennzeichnung des im jeweils nächsten Bereitstellungszyklus zu berücksichtigenden Mikrobefehlswortes aus einem ODER-Glied (OR) besteht, das das niedrigste Adressenbit (CMAD-1) der im Adressenrechner (AD-R) für den Registersteuerspeicher (CM) bereitgestellten Adresse zur Kennzeichnung der Mikrobefehlswörter an zweiter Stelle mit dem Gültigkeitsmerker (CMDV) für das Zwischenspeicherregister (CMD) verknüpft.

7. Mikroprogramm-Steuereinrichtung nach Anspruch 5 oder 6, dadurch gekennzeichnet, dass zur Steuerung der linearen Adressenfolge für den Registersteuerspeicher (CM) die im Adressenrechner (AD-R) jeweils vorhandene Adresse abhängig von einem Signal der Einrichtung zur Steuerung der Adressenrechnung in der Bereitstellungssteuereinrichtung (B-ST) um den Wert "1" oder "2" erhöht wird.

8. Mikroprogramm-Steuereinrichtung nach einem der Ansprüche 1 bis 7, dadurch gekennzeichnet, dass der Gültigkeitsmerker (CMDV) für das Zwischenspeicherregister (CMD) zweistufig ausgeführt ist, wobei der Inhalt der ersten Stufe (CMDHV) zeitverzögert innerhalb eines Bereitstellungszykluss auch in die zweite Stufe (CMDV) übernommen wird, die allein für den Steuerungsablauf durch die Bereitstellungs-Steuereinrichtung (B-ST) massgebend ist, dass die zweite Stufe (CMDV) bei jeder nicht linearen Adressenänderung (z.B. Sprung) für den Registersteuerspeicher (CM) zurückgesetzt wird und dass bei einem nachfolgenden Fehler im laufenden Bereitstellungszyklus der nächstfolgende die zweite Stufe (CMDV) bei jeder nichtlinearen Registern (CMD, CUM, PAM) gesperrt wird.

**Claims**

1. Microprogramme control apparatus having a register control store which during each read access simultaneously makes available a first and a second micro-instruction word for the subsequent processing characterised in that the output of the register control store (CM) for the second micro-instruction word (component CM1) is connected to an intermediate storage register (CMD), that the output of the register control store (CM) for the first micro-instruction word (component CM0) and the output of the intermediate storage register (CMD) for the second micro-istruction word are respectively connected to the inputs of two multiplexers (MUX1, MUX2) which optionally switch through to the output the one or the other of the two micro-instruction words, which are respectively available at the input, that the output of each multiplexer (MUX1, MUX2) is connected to an instruction register (CUM and PAM) of an independently operating processing unit (CU) or a group of processing units (PU, AU) as the case may be, and that the transfer into the assigned instruction registers (CUM and PAM) of the micro-instruction words, which are respectively made available by the register control store (CM) and/or the intermediate storage register (CMD), is controlled by a load control device (B-ST) in dependence upon instruction identifications (BK), which are carried in the respective micro-instruction word, so that the micro-instruction words, which are made available by the register control store (CM) during two consecutive read accesses if necessary, are processed by the individual processing units (CU, PU or AU) either individually one after another or simultaneously in parallel with one another, where in the event that a micro-instruction word, with which a subsequent micro-instruction word has to be carried out in parallel, occupies the first position within a double word, the two instructions which are made available simultaneously, are directly transferred to the micro-instruction register, and where in the event that the micro-instruction word occupies the second position within a double word, said micro-instruction word is stored in the intermediate storage register, so that said micro-instruction word is transferred to the micro-instruction register simultaneously with the micro-instruction word of the subsequent double word which occupies the first position.

2. Microprogramme control apparatus as claimed in claim 1, characterised in that at least the intermediate storage register (CMD) is assigned a validity marker (CMDV) which indicates the intermediate storage of a micro-instruction word, and that the instruction identifications (BK) of the micro-instruction word, which is intermediately stored in the intermediate storage register (CMD), are only considered by the load control device (B-ST) when the validity marker (CMDV) is set.

3. Microprogramme control apparatus as claimed in claim 2, characterised in that the validity markers (CMDV, CUMV, PAMV) are maintained by the load control device (B-ST) and are respectively set when loading a valid micro-instruction registers (CUM, PAM) for the independently operating processing units (CU, PU, AU) are respectively assigned a validity marker (CUMV, PAMV).

4. Microprogramme control apparatus as claimed in claim 2 or 3, characterised in that the micro-instruction word into the assigned register (CMD, CUM, PAM).

5. Microprogramme control apparatus as claimed in one of claims 1 to 4, characterised in that the load control device (B-ST) has both a device which serves to mark the micro-instruction word to be considered in the next load cycle and which influences the control logic of the load control device (B-ST), and a device which serves to control the address calculation for the register control store (CM).

6. Microprogramme control apparatus as claimed in claim 5, characterised in that the device which serves to mark the micro-instruction word to be considered in the next load cycle comprises an OR-element (OR) which links to the validity marker (CMDV) for the intermediate storage register (CMD), the lowest address bit (CMAD-1) of the address, which serves to identify the micro-instruction words at the second position and which is made available in the address calculator (AD-R) for the register control store (CM).

7. Microprogramme control apparatus as claimed in claim 5 or 6, characterised in that in order to control the linear address sequence for the register control store (CM) the respectively available address in the address calculator (AD-R) is increased by the value "1" or "2" in the load control device (B-ST) in dependence upon a signal of the device which serves to control the address calculation.

8. Microprogramme control apparatus as claimed in one of claims 1 to 7, characterised in that the validity marker (CMDV) for the intermediate storage register (CMD) is designed so as to be two-stage, where the content of the first stage (CMHV) is also transferred into the second stage (CMDV) in a time-delayed fashion within a load cycle, which second stage alone is responsible for the control sequence by the load control device (B-ST), that the second stage (CMDV) is re-set in the case of each non-linear address modification (e.g. jump) for the register control store (CM), and that in the event of a subsequent error in the current load cycle the next result clock pulse for modifying the data in the registers (CMD, CUM, PAM) is blocked.

## Revendications

1. Dispositif de commande d'un microprogramme avec une mémoire de commande d'un registre, qui prépare, à chaque accès de lecture, un premier et un second mot de micro-instruction simultanément pour l'évaluation suivante, caractérisé par le fait que la sortie de la mémoire de commande de registre (CM) pour le second mot de micro-instruction (partie CM1) est reliée à un registre de mémoire intermédiaire (CMD), que la sortie de la mémoire de commande de registre (CM) pour le premier mot de micro-istruction (partie CM0) et la sortie du registre de mémoire intermédiaire (CMD) pour le second mot de micro-instruction est reliée à l'une des entrées de deux multiplexeurs (MUX1, MUX2) qui transmettent, au choix, à la sortie, l'un ou l'autre des deux mots de micro-instruction qui sont disponibles à l'entrée, que la sortie de chaque multiplexeur (MUX1, MUX2) est reliée à un registre d'instructions (CUM ou PAM) d'une unité de traitement (CU) opérant de façon individuelle ou d'un groupe d'unités de traitement (PU, AU) et que la transmission des mots de micro-instructions respectivement préparés par la mémoire de commande de registre (CM) et/ou du registre de mémoire intermédiaire (CMD) aux registres d'instructions associés (CUM ou PAM) est commandée par une unité de commande d'états de traitement (B-ST) en fonction d'identifications d'instructions (BK) convoyées par le mot de micro-instruction concerné, de manière que les mots de micro-instructions préparés par la mémoire de commande de registre (CM), éventuellement dans deux accès successifs de lecture, soient traités, au choix, individuellement et successivement au simultanément et en parallèle entre eux par les différentes unités de traitement (CU, PU ou AU), la réalisation étant telle que dans le cas où un mot de micro-instruction, parallèlement auquel un mot de micro-instruction suivant doit être exécuté, se trouve en première position dans le mot double, les deux instructions simultanément en état de traitement sont directement transmises aux registres de micro-instructions, alors que dans le cas où le mot de micro-instruction se trouve en seconde position dans le mot double, ce mot de micro-instruction est mémorisé dans le registre de mémoire intermédiaire, en sorte que ce mot de micro-instruction est transmis aux registres de micro-instructions en même temps que le mot de micro-instruction du double mot suivant, et qui est en première position.

2. Dispositif de commande d'un microprogramme selon la revendication 1, caractérisé par le fait qu'au moins au registre de mémoire intermédiaire (CMD) est associé un indicateur de validité (CMDV) qui indique la mémorisation intermédiaire d'un mot de micro-instruction, et que l'on ne tient compte des identifications des instructions (BK) du mot de micro-instruction qui a été mémorisé temporairement dans le registre de mémoire intermédiaire (CMD), que si l'indicateur de validité (CMDV) a été activé.

3. Dispositif de commande d'un microprogramme selon la revendication 2, caractérisé par le fait qu'on associe également à chacun des registres de micro-instructions (CUM, PAM), pour les unités de traitement (CU, PU, AU) opérant de façon individuelle, un indicateur de validité (CUMV, PAMV).

4. Dispositif de commande d'un microprogramme selon la revendication 2 ou 3, caractérisé par le fait que les indicateurs de validité (CMDV, CUMV, PAMV) sont administrés par le dispositif de commande de l'état de traitement (B-ST) et sont activés lors du chargement d'un mot de micro-instruction valable dans le registre associé (CMD, CUM, PAM).

5. Dispositif de commande d'un microprogramme selon l'une des revendications 1 à 4, caractérisé par le fait que le dispositif de commande de l'état de traitement (B-ST) comporte un dispositif pour l'identification du mot de micro-instruction dont il convient de tenir compte dans le cycle de préparation suivant, et qui influence la logique de commande du dispositif de commande de l'état de traitement (B-ST), ainsi qu'un dispositif pour la commande du calcul d'adresses pour la mémoire de commande de registre (CM).

6. Dispositif de commande d'un microprogramme selon la revendication 5, caractérisé par le fait que le dispositif pour l'identification du mot de micro-instruction dont il convient de tenir compte dans le cycle de mise en état de traitement suivant, est constitué par un circuit OU (OR) qui combine, avec l'indicateur da validité (CMDV) pour le registre de mémoire intermédiaire (CMD), le bit d'adresse le plus bas (CMAD-1) de l'adresse préparée dans le calculateur d'adresses (AD-R) pour la mémoire de commande de registre (CM) et qui sert à identifier les mots de micro-instructions en seconde position.

7. Dispositif de commande d'un microprogramme selon la revendication 5 ou 6, caractérisé par le fait que pour la commande de la série linéaire d'adresses pour la mémoire de commande de registre (CM), l'adresse qui est présente dans le calculateur d'adresses (AD-R) est augmentée, en fonction d'un signal du dispositif pour la commande du calcul d'adresses, de la valeur "1" ou "2", dans le dispositif de commande de la mise en état de traitement (B-ST).

8. Dispositif de commande d'un microprogramme selon l'une des revendications 1 à 7, caractérisé par le fait que l'indicateur de validité (CMDV) pour le registre de mémoire intermédiaire (CMD) est réalisé en deux étages, étant noté que le contenu du premier étage (CMDHV) est pris en charge, avec un retard dans le temps, pendant le cycle de mise en état de traitement, également dans le second étage (CMDV) qui seul est déterminant pour le déroulement de la commande par le dispositif de commande de mise en état de traitement (B-ST), que le second étage (CMDV) est remis à l'état initial à chaque modification d'adresse non linéaire (par exemple un saut) pour la mémoire de commande de registre (CM) et que lors d'une erreur suivante dans le cycle de mise en état de traitement qui se déroule, la cadence suivante du résultat, pour la modification des données dans les registres (CMD, CUM, PAM), est bloquée.

# FIG 1

# FIG 2

| CM – Bit: | | | Befehl für ___ | Kurzbezeichnung | |
|---|---|---|---|---|---|
| 0 | 1 | 2 | | | |
| 0 | X | X | PU einzeln | PAU | → CUP |
| 1 | 0 | X | AU einzeln | | |
| 1 | 1 | 0 | CU einzeln | CU | |
| 1 | 1 | 1 | CU parall zu PU oder AU | CUP | |

# FIG 3

FIG 4